# EUROPÄISCHE PATENTSCHRIFT

(11) **EP 2 495 841 B1**
(45) Veröffentlichungstag und Bekanntmachung des Hinweises auf die Patenterteilung: **18.12.2019**
(21) Anmeldenummer: 12002657.0
(22) Anmeldetag: 06.04.2006
(51) Int. Cl.: H02J 50/10, H02K 5/22, H02K 11/00

(54) **Verbraucher und System mit induktiver Energieübertragung**
Consumer and system with inductive energy transfer
Consommateur et système avec transmission d'énergie inductive

(30) Priorität: 10.05.2005 DE 102005022367
(43) Veröffentlichungstag der Anmeldung: 05.09.2012
(62) Teilanmeldung aus: 06724081.2
(73) Patentinhaber: SEW-EURODRIVE GmbH & Co. KG, 76646 Bruchsal (DE)
(72) Erfinder: Schmidt, Josef, 76676 Graben-Neudorf (DE)

(56) Entgegenhaltungen:
- WO-A1-01/73783
- DE-A1- 4 412 957
- US-A- 5 293 308
- US-A- 5 301 096
- US-B1- 6 310 291

## Beschreibung

Die Erfindung betrifft ein **System zur induktiven Energieübertragung mit** Verbraucher und Versorgung.

In industriellen Anlagen ist bekannt, elektrische Verbraucher, wie beispielsweise elektronische Geräte, Beleuchtungsvorrichtungen, Antriebe, Maschinen und dergleichen, aus einem Netz galvanisch zu versorgen, insbesondere mit Wechselstrom von 50 oder 60 Hz. Dazu sind die Verbraucher meist mittels kostspieliger Steckverbinder mechanisch angeschlossen und elektrisch verbunden. Außerdem weist eine solche Anlage oder Maschine meist für jeden Antrieb ein T-Stück als Energieabzweigung auf. Diese T-Stücke sind aufwendig zu installieren und kostspielig, besonders wenn sie in hoher Schutzart für den Nassbereich oder gar den aseptischen Bereich einsetzbar sein müssen. Diese T-Stücke werden auch als Verteilerkästen bezeichnet und umfassen oft auch weitere Vorrichtungsteile, wie beispielsweise Notaus-Schalter. Somit sind sie aufwendig und kostspielig, insbesondere auch hinsichtlich der Installation.

Aus der DE 103 60 604 ist ein System und ein Verbraucher zur berührungslosen Versorgung bekannt.

**Aus der** US 5 301 096 A **ist ein submarines berührungsloses Energieübertragungssystem bekannt.**

**Aus der** DE 44 12 957 A1 **ist eine Übertragungseinrichtung bekannt.**

**Aus der** WO 01/73783 A1 **ist eine skalierbare Leistungsversorgungseinheit für einen fernsteuerbaren, halbautomatischen Roboter bekannt.**

**Aus der** US 5 293 308 A **ist ein induktives Leistungsverteilungssystem bekannt.**

**Aus der** US 6 310 291 B1 **ist eine Verschließeinheit bekannt.**

**Aus der** DE 103 60 604 A1 **ist ein System zur induktiven Versorgung von Verbrauchern bekannt**

**Aus der** US 6 127 800 A **ist eine magnetische Kopplung zum Aufladen eines Elektrofahrzeugs bekannt.**

**Aus der** DE 102 39 252 A1 **ein induktiv versorgter Drehtisch bekannt, der mehrere Antriebe aufweist.**

**Aus der** DE 196 49 682 C2 **ist eine Vorrichtung zur breitbandigen Signal- bzw. Energieübertragung zwischen gegeneinander beweglichen Einheiten bekannt.**

Der Erfindung liegt daher die Aufgabe zugrunde, eine einfachere und kostengünstigere Verkabelung bei elektrischen Verbrauchern und Anlagen zu schaffen.

Erfindungsgemäß wird die Aufgabe bei dem System nach den in Anspruch 1 angegebenen Merkmalen gelöst.

**Von Vorteil ist dabei, dass** eine schnelle Verbindung und Trennung mit dem versorgenden System möglich **ist.** Es müssen keine elektrischen freiliegenden Kontakte verwendet werden. Außerdem ist das Einschiebeteil aus Kunststoff kostengünstig herstellbar.

Von Vorteil ist dabei, dass der Verbraucher dicht und in hoher Schutzart in kostengünstiger Weise ausführbar ist. Die berührungslose Versorgung des Verbrauchers ermöglicht nämlich, das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist er somit in Nassbereichen und aseptischen Bereichen einsetzbar. Die Zeit, welche für das Verkabeln notwendig ist, ist mit der Erfindung reduzierbar. Weiterhin werden Ableitströme, die bei konventioneller Steckerverkabelung auftreten, verhindert, so dass eine verbesserte elektromagnetische Verträglichkeit entsteht.

Weiter ist von Vorteil, dass die Einspeisung zu den Verbrauchern potentialfrei ist und die sonst in Anlagen vorhandene Potentialverschleppung sowie Funkentstörmittel bei Trennschaltern entfallen. Außerdem ist eine Blindleistungskompensation, insbesondere im Verbraucher, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind. Trennschalter sind entbehrlich, da ein Auftrennen durch ein Herausziehen des Primärleiters ersetzbar ist.

**Erfindungsgemäß** ist an das Einschiebeteil ein Schloss, umfassend Schlossbügel, formschlüssig verbindbar, wobei für das Lösen des Schlosses vom Einschiebeteil ein Schlüssel notwendig ist. Insbesondere ist eine Bohrung vorgesehen für den Schlossbügel des Schlosses. Vorteiligerweise ist nur ein beabsichtigtes und befugtes Lösen der Versorgung vom Verbraucher ausführbar.

**Erfindungsgemäß** ist das Einschiebeteil mit dem Verbraucher mit derartigen Mitteln verbindbar, dass die Verwendung eines Werkzeuges notwendig ist. Vorteiligerweise ist nur ein beabsichtigtes Lösen der Versorgung vom Verbraucher ausführbar.

Bei einer vorteilhaften Ausgestaltung weist der Verbraucher ein Gehäuseteil auf, das gehäusebildende Funktion für einen Elektromotor, ein Getriebe und einen den Elektromotor versorgende elektronische Schaltung, umfassen Frequenzumrichter, aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist. Vorteiligerweise ist somit ein Gehäuseteil geformt, das mehrere Funktionen vereint, also Gehäuse ist für verschiedene Komponenten des Antriebs und Aufnahme für die Versorgung.

Bei einer vorteilhaften Ausgestaltung ist ein Primärleiter derart am Verbraucher vorgesehen, dass eine induktive Kopplung mit einer vom Verbraucher umfassten Sekundärwicklung vorsehbar ist. Von Vorteil ist dabei, dass kein Steckverbinder notwendig ist und somit die Verkabelung schnell und einfach ausführbar ist. Außerdem sind Kosten einsparbar. Da keine Kabelkonfektionierung notwendig ist, kann die Installation auch durch nicht elektrotechnisch geschultes Personal durchgeführt werden.

Bei einer vorteilhaften Ausgestaltung ist mindestens ein Primärleiter in einer Vertiefung oder einem Kabelkanal des Verbrauchers vorgesehen. Von Vorteil ist dabei, dass die Kabelverlegung sehr schnell und einfach ausführbar ist, nämlich durch bloßes Hineindrücken in die Vertiefung oder den Kabelkanal. Zusätzlich ist ein Vergießen mit einer Vergussmasse vorteilig ausführbar.

Bei einer vorteilhaften Ausgestaltung ist mindestens eine Sekundärwicklung um einen U-förmigen und/oder E-förmigen Kern gewickelt oder in einen sehr flach ausgeführten Empfängerkopf integriert. Von Vorteil ist dabei, dass je nach verwendetem Verfahren, gewünschter Leistung und gewünschtem Wirkungsgrad die Ausführung wählbar ist.

Bei einer vorteilhaften Ausgestaltung sind die Primärleiter mindestens teilweise vergossen und/oder mittels eines Deckels geschützt. Von Vorteil ist dabei, dass eine besonders hohe Schutzart erreichbar ist und keine verschmutzungsgefährdeten Hohlräume entstehen. Derartige in Deckel bzw. Halter vergossene Leiterstücke können an einer glatten Gehäuseoberfläche des Verbrauchers montiert werden, so dass keine Vertiefung bzw. kein Kanal am Verbraucher vorgesehen werden muss.

Bei einer vorteilhaften Ausgestaltung ist der Verbraucher dicht, an der äußeren Oberfläche glatt und/oder in hoher Schutzart ausgeführt. Von Vorteil ist dabei, dass der Verbraucher insbesondere zum Einsatz in Nassbereichen und/oder aseptischen Bereichen vorsehbar ist.

Bei einer vorteilhaften Ausgestaltung umfasst der Verbraucher keinen Steckverbinder oder andere elektrische Anschlussvorrichtungen an seinem Äußeren. Von Vorteil ist dabei wiederum, dass der Verbraucher in einfacher Weise dicht und in hoher Schutzart ausführbar ist.

Die Erfindung wird nun anhand von Abbildungen näher erläutert:

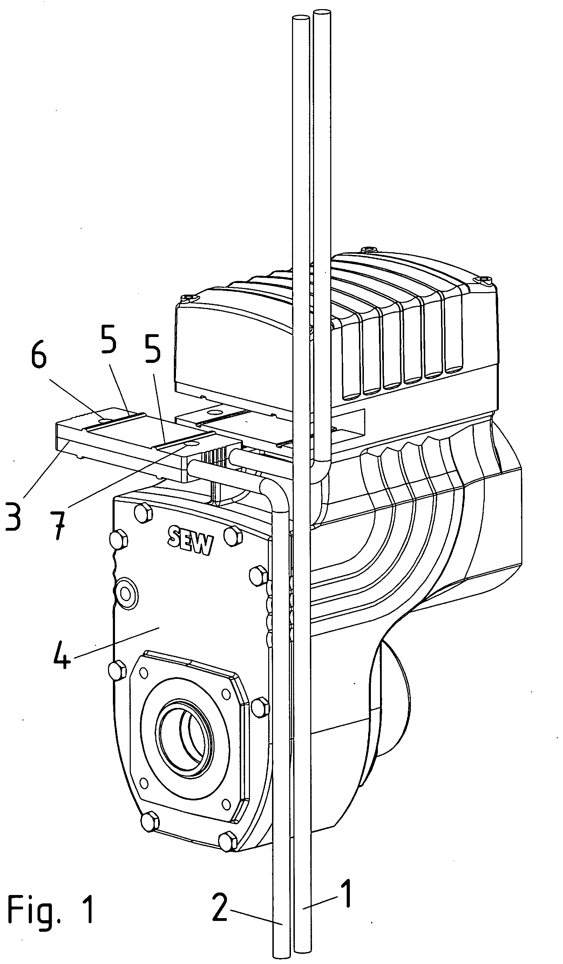

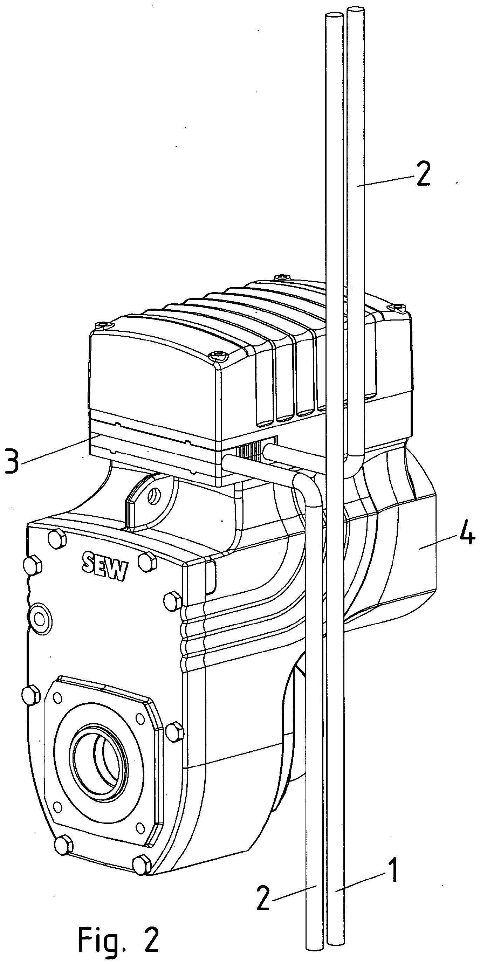

In der Figur 1 ist ein erfindungsgemäßer Verbraucher symbolisch gezeigt, wobei der Verbraucher von der Versorgung abgetrennt ist. In der Figur 2 ist ein erfindungsgemäßer Verbraucher symbolisch gezeigt mit Versorgung.

Das Primärleitersystem umfasst einen Hinleiter 1 und einen Rückleiter 2, in welche ein mittelfrequenter Wechselstrom eingeprägt wird.
Der als Umrichtergetriebemotor ausgeführte Verbraucher 4 umfasst eine Sekundärspule, die nach Einschieben des Einschiebeteils 3 induktiv gekoppelt ist an das Primärleitersystem.

Das Einschiebeteil 3 weist Erhebungen 5 zur formschlüssigen Verbindung mit dem Verbraucher 4 oder zumindest als Führung beim Einschieben des Einschiebeteils 3 auf. Bohrungen 6, 7 sind des Weiteren vorgesehen.

Mittels einer Schraube, die durch die Bohrung 6 steckbar ist und auch in einer Bohrung des Verbrauchers einbringbar ist, kann das Einschiebeteil 3 mit dem Verbraucher 4 formschlüssig gekoppelt werden. Dabei ist ein Werkzeug notwendig und das Lösen der Verbindung ist nur von Bedienern mit Werkzeug ausführbar.

In der Bohrung 7 ist bei aus dem Verbraucher herausgenommenem Einschiebeteil 3 ein Vorhängeschloss mit seinem Schlossbügel einhängbar. Auf diese Weise ist das WiederEinschieben des Einschiebeteils in den Verbraucher blockierbar.

Somit kann nur ein befugter Bediener mit Schlüssel für das Schloss des Vorhängeschlosses die elektrische Versorgung des Verbrauchers wiederherstellen.

Der Verbraucher weist einen U-Kern oder einen E-förmigen Kern auf, der die Sekundärspule an das Primärleitersystem verbessert ankoppelt.

### Bezugszeichenliste

1 Hinleiter des Primärleitersystems
2 Rückleiter des Primärleitersystems
3 Einschiebeteil
4 Umrichtergetriebemotor als Verbraucher
5 Erhebungen
6 Bohrung
7 Bohrung

## Patentansprüche

1. **System mit** Verbraucher und Versorgung,
wobei der Verbraucher von der Versorgung abgetrennt werden kann,
und der Verbraucher (4), der als Umrichtergetriebemotor ausgeführt ist, eine Sekundärspule umfasst, die nach Einschieben eines Einschiebeteils (3) in eine Vertiefung des Verbrauchers induktiv gekoppelt ist an ein Primärleitersystem (1, 2),
und der Verbraucher einen U-Kern oder einen E-förmigen Kern aufweist, der die Sekundärspule verbessert an das Primärleitersystem ankoppelt,
wobei das Primärleitersystem einen Hinleiter (1) und einen Rückleiter (2) umfasst, in welche ein mittelfrequenter Wechselstrom eingeprägt wird,
und wobei das Einschiebeteil (3) Erhebungen (5) aufweist zur formschlüssigen Verbindung mit dem Verbraucher (4) oder zumindest als Führung beim Einschieben des Einschiebeteils (3),
weiterhin sind im Einschiebeteil (3) Bohrungen (6, 7) vorgesehen, wobei eine Schraube durch die Bohrung (6) steckbar ist, welche auch in eine Bohrung des Verbrauchers einbringbar ist, so dass das Einschiebeteil (3) mit dem Verbraucher (4) formschlüssig gekoppelt werden kann, und ein Werkzeug notwendig ist,
so dass das Lösen der Verbindung nur von Bedienern mit Werkzeug ausführbar ist und
wobei weiterhin in der Bohrung (7), bei aus dem Verbraucher herausgenommenem Einschiebeteil (3), ein Vorhängeschloss mit seinem Schlossbügel einhängbar ist,
so dass das Wiedereinschieben des Einschiebeteils in den Verbraucher blockierbar ist und somit nur ein befugter Bediener mit Schlüssel für das Schloss des Vorhängeschlosses die elektrische Versorgung des Verbrauchers wiederherstellen kann.

2. System nach Anspruch 1,
**dadurch gekennzeichnet, dass**
der Verbraucher derart gestaltet ist, dass Information durch Aufmodulation von höherfrequenten Signalen auf den Primärleiter übertragbar ist.

3. System nach mindestens einem der vorangegangenen Ansprüche,
**dadurch gekennzeichnet, dass**
der Primärleiter mit mittelfrequentem Wechselstrom beaufschlagt ist,

4. System nach mindestens einem der vorangegangenen Ansprüche,
**dadurch gekennzeichnet, dass**
der Primärleiter mit mittelfrequentem Wechselstrom von etwa 10 bis 50 kHz, insbesondere von etwa 20 kHz, beaufschlagt ist.

5. System nach mindestens einem der vorangegangenen Ansprüche,
**dadurch gekennzeichnet, dass**
der Primärleiter als geschlossene Schleife verlegt ist.

6. System nach mindestens einem der vorangegangenen Ansprüche,
**dadurch gekennzeichnet, dass**
Primärleiter und Verbraucher galvanisch entkoppelt sind.

## Claims

1. A system with a consumer and power supply,
wherein the consumer can be separated from the power supply,
and the consumer (4), which is embodied as a converter-fed geared motor, comprises a secondary coil which once an insertion part (3) has been inserted into a depression in the consumer is inductively coupled to a primary conductor system (1, 2),
and the consumer has a U-shaped core or an E-shaped core which couples the secondary coil in improved manner to the primary conductor system,
wherein the primary conductor system comprises a forward conductor (1) and a return conductor (2), into which a medium-frequency alternating current is injected,
and wherein the insertion part (3) has elevations (5) for positive connection to the consumer (4) or at least as a guide when inserting the insertion part (3),
furthermore, bores (6, 7) are provided in the insertion part (3), wherein a screw is able to be inserted through the bore (6), which screw can also be introduced into a bore in the consumer, so that the insertion part (3) can be coupled with the consumer (4) in a positively locking manner, and a tool is necessary,
so that the releasing of the connection can be carried out only by operators with a tool, and
wherein furthermore, when the insertion part (3) has been removed from the consumer, a padlock can be hooked with its lock shackle in the bore (7),
so that the reinsertion of the insertion part into the consumer can be blocked and thus only an authorised operator with a key for the lock of the padlock can restore the electrical supply to the consumer.

2. A system according to Claim 1,
**characterised in that**
the consumer is configured such that information can be transmitted by modulating higher-frequency signals onto the primary conductor.

3. A system according to at least one of the preceding claims,
**characterised in that**
the primary conductor is fed with medium-frequency alternating current.

4. A system according to at least one of the preceding claims,
**characterised in that**
the primary conductor is fed with medium-frequency alternating current of approximately 10 to 50 kHz, in particular of approximately 20 kHz.

5. A system according to at least one of the preceding claims,
**characterised in that**
the primary conductor is laid as a closed loop.

6. A system according to at least one of the preceding claims,
**characterised in that**
the primary conductor and consumer are galvanically isolated.

## Revendications

1. Système avec appareil consommateur et alimentation,
sachant que l'appareil consommateur peut être séparé de l'alimentation,
et que l'appareil consommateur (4), qui est réalisé sous forme de motoréducteur à convertisseur, comprend une bobine secondaire qui, à la suite de l'insertion d'une pièce insérable (3) dans un renfoncement de l'appareil consommateur, est couplée par induction à un système conducteur primaire (1, 2),
et que l'appareil consommateur présente un noyau en U ou un noyau en forme de E, qui accouple la bobine secondaire de façon améliorée au système conducteur primaire, sachant que le système conducteur primaire comprend un conducteur d'amenée (1) et un conducteur de retour (2), dans lesquels est injecté un courant alternatif à moyenne fréquence,
et sachant que la pièce insérable (3) présente des bossages ou proéminences (5) pour la liaison en engagement positif avec l'appareil consommateur (4) ou au moins comme guide lors de l'insertion de la pièce insérable (3),
des perçages (6, 7) étant en outre prévus dans la pièce insérable (3), sachant qu'on peut enfiler dans le perçage (6) une vis qui peut être également introduite dans un perçage de l'appareil consommateur, de sorte que la pièce insérable (3) peut être accouplée en engagement positif à l'appareil consommateur (4), un outil étant nécessaire,
de sorte que la suppression de la liaison ne peut être effectuée que par des opérateurs munis d'un outil,
et sachant en outre qu'un cadenas peut être accroché par son anneau de cadenas dans le perçage (7), la pièce insérable (3) étant retirée de l'appareil consommateur,
de sorte que la réinsertion de la pièce insérable dans l'appareil consommateur peut être empêchée et donc que l'alimentation électrique de l'appareil consommateur ne peut être rétablie que par un opérateur autorisé muni de la clé pour la serrure du cadenas.

2. Système selon la revendication 1, **caractérisé en ce que** l'appareil consommateur est réalisé de telle sorte que des informations peuvent être transmises sur le conducteur primaire par modulation de signaux à haute fréquence.

3. Système selon au moins une des revendications précédentes, **caractérisé en ce que** le conducteur primaire est alimenté en courant alternatif à moyenne fréquence.

4. Système selon au moins une des revendications précédentes, **caractérisé en ce que** le conducteur primaire est alimenté en courant alternatif à moyenne fréquence d'environ 10 à 50 kHz, en particulier d'environ 20 kHz.

5. Système selon au moins une des revendications précédentes, **caractérisé en ce que** le conducteur primaire est posé sous forme de boucle fermée.

6. Système selon au moins une des revendications précédentes, **caractérisé en ce que** le conducteur primaire et l'appareil consommateur sont galvaniquement découplés.
